# EUROPÄISCHE PATENTSCHRIFT

(11) **EP 2 331 356 B1**
(45) Veröffentlichungstag und Bekanntmachung des Hinweises auf die Patenterteilung: **08.08.2012**
(21) Anmeldenummer: 09776021.9
(22) Anmeldetag: 28.07.2009
(51) Int. Cl.: B60K 15/03

(54) **KUNSTSTOFFTANK**
PLASTIC TANK
RÉSERVOIR EN PLASTIQUE

(30) Priorität: 30.09.2008 DE 202008012978 U
(43) Veröffentlichungstag der Anmeldung: 15.06.2011
(73) Patentinhaber: Elkamet Kunststofftechnik GmbH, 35216 Biedenkopf (DE)
(72) Erfinder: NEEBE, Martin, 35260 Stadtallendorf-Niederklein (DE)
(74) Vertreter: Buchhold, Jürgen
(86) Internationale Anmeldenummer: PCT/DE2009/001048
(87) Internationale Veröffentlichungsnummer: WO 2010/037357

(56) Entgegenhaltungen:
- DE-A-102007 029 569
- DE-A1- 1 596 113
- DE-A1-102004 009 365
- DE-A1-102005 060 246
- DE-U1- 8 520 156
- DE-U1- 29 511 606

## Beschreibung

Die Erfindung betrifft einen Kunststofftank gemäß dem Oberbegriff von Anspruch 1.

Fahrzeuge werden gewöhnlich mit Kraftstofftanks aus Kunststoff ausgestattet. Damit jedoch ein Behälter aus Kunststoff als Kraftstofftank verwendet werden kann, müssen in der Regel mehrere Anforderungen erfüllt sein. So darf beispielsweise die Permeation von Kraftstoff oder Kraftstoffbestandteilen bestimmte Grenzwerte nicht übersteigen. Der Tank muss ferner mechanisch stabil sein, d.h. er muss insbesondere Schlag- und Stoßbeanspruchungen, ggf. auch bei tiefen Temperaturen, unbeschadet überstehen. Schließlich werden häufig auch optische Anforderungen gestellt, die sich entweder auf die optische Qualität der Kunststoffoberfläche selbst beziehen oder die Forderung nach Lackierbarkeit dieser Oberfläche betreffen.

Man hat daher Mehrschichttanks entwickelt, die diesen Anforderungen gerecht werden sollen.

Bekannt ist beispielsweise ein im Rotationsgießverfahren hergestellter doppelwandiger Kraftstoffbehälter gemäß DE 85 20 156 U 1 mit einer Polyethylen-Außenschicht und einer Polyamid-Innenschicht. Weil sich Polyethylen und Polyamid jedoch nicht ohne weiteres miteinander verbinden lassen, ist eine Haftvermittlerschicht aus geschäumtem Polyethylen und/oder geschäumtem Polyamid notwendig, um beide Schichten fest und unlösbar miteinander zu verbinden.

DE 10 2005 060 246 A1 offenbart einen durch Rotationsschmelzen, Blasformen o.dgl. hergestellten Kunststofftank, der aus vernetztem Polyethylen (XPE) besteht und mit einer metallischen Zweifach- oder Mehrfach-Beschichtung versehen ist, die innen und/oder außen angebracht sein kann. Eine solche bevorzugt durch Lichtbogen-Abscheidung aufgebrachte Beschichtung kann rau oder glatt sein; sie haftet gut und hat gute Barriere-Eigenschaft. Der Tank besitzt zudem eine hohe Festigkeit gegen Erschütterungen und Druck-Wechselbeanspruchungen. Das Aufbringen von Metallschichten erfordert jedoch meist mehrstufige komplexe Verfahrensabläufe und einen hohen apparativen Aufwand.

Ziel der Erfindung ist es, diese und weitere Nachteile des Standes der Technik mit möglichst wirtschaftlichen Mitteln zu überwinden und einen Kunststoff-Tank von einfachem Aufbau zu schaffen, der hohen Belastungen dauerhaft standhält und zugleich eine unzulässige Kraftstoff-Permeation vermeidet. Der Tank soll überdies vielfältige Gestaftungsmöglichkeiten eröffnen und hohen optischen Anforderungen gerecht werden, wobei ein maximales Volumen unter optimaler Ausnutzung vorhandener Bauräume anzustreben ist.

Hauptmerkmale der Erfindung sind im kennzeichnenden Teil von Anspruch 1 angegeben. Ausgestaltungen sind Gegenstand der Ansprüche 2 bis 5.

Bei einem Kunststofftank, insbesondere einem durch Rotationsschmelzen oder Blasformen hergestellten Kraftstofftank für ein Fahrzeug, mit einer ersten äußeren Schicht und einer zweiten inneren Schicht, sieht die Erfindung vor, dass die äußere Schicht aus vernetztem Polyethylen (XPE) und die innere Schicht aus Polyamid 11 (PA 11) oder Polyamid 12 (PA 12) besteht.

Versuche haben überraschend gezeigt, dass ein solcher Kunststofftank nicht nur optimale Eigenschaften in Bezug Schlagverhalten und Permeationsverhalten aufweist. Es entsteht vielmehr ein äußerst stabiler Schichtverbund, bei dem die innere Schicht dauerhaft fest an der äußeren Schicht haftet, ohne dass eine Haftvermittlerschicht notwendig ist. Ebenso sind weder Vor- noch Nachbehandlungen der einzelnen Schichten notwendig, um eine feste Verbindung zwischen den Schichten zu erzielen, was sich günstig auf die Herstellkosten auswirkt. Der gesamte Tank ist bereits nach dem Entformen außerordentlich stabil und hält selbst größeren Stoßbelastungen problemlos stand, auch bei tieferen Temperaturen.

Die Verwendung von vernetztem Polyethylen als Material für die Außenschicht hat weiter den Vorteil, dass auf der Oberfläche der Tankwandung keine Pinholes entstehen. Dadurch lassen sich ohne großen Aufwand optisch anspruchsvolle Sichtflächen realisieren, die - abgesehen von einer möglichen späteren Lackierung oder Beschichtung - keine Nachbehandlung oder Nachbearbeitung mehr erfordern. Auch kann man den Verbrauch von Surface Enhancer im Vergleich zu herkömmlichen Materialien deutlich reduzieren, denn selbst filigrane Details in der Formwandung werden durch die Verwendung von XPE exakt nachgebildet und vollständig ausgeformt, so dass selbst kompliziertere Tankfarmen problemlos realisiert werden können.

Ein weiterer Vorteil besteht darin, dass innerhalb der Rotationsform auf Innestützluft während der ersten Heizperiode verzichtet werden kann, was den Fertigungsaufwand weiter reduziert.

Die Verwendung von Polyamid 11 oder Polyamid 12 sorgt für eine sehr geringe Kraftstoffpermeation, d.h. der Tank wird durch die Innenschicht zwerlässig abgedichtet Aufwendige Metallbeschichtungen oder sonstige Maßnahme sind nicht erforderlich. Der Tank lässt sich vielmehr dank der verwendeten Materialien auf einer herkömmlichen Rotationsmaschine ohne großen Aufwand rationell und kostengünstig fertigen.

Durch die Kombination von Polyamid 11 oder Polyamid 12 für die Innenschicht mit einem vernetzten Polyethylen (XPE) für die Außenschicht und durch die gute Ausformbarkeit von Details im und am Tank, besteht überdies die Möglichkeit, die Einwaage an Polyamid 11 oder Polyamid 12 gegenüber herkömmlichen Kunststofftanks zu verringern. Die innere Schicht kann mithin dünner ausgebildet werden als die äußere Schicht, was sich weiter günstig auf die Herstellkosten auswirkt. Dadurch besteht wiederum der Vorteil, dass auch Details mit engen Innendurchmessern wie beispielsweise Laschen, Griffe oder Stege präzise ausgeformt werden können, ohne das Permeationsverhalten in diesen Bereichen zu beeinträchtigen. Derartige Ausformungen tragen folglich - dank der verbleibenden Hohlräume - zum Tankvolumen bei, welches - unter Ausnutzung vorhandener Bauräume im Fahrzeug - weiter optimiert werden kann.

Je nach Anforderung oder Kundenwunsch, kann die innere und/oder die äußere Schicht des Kunststofftanks bei Bedarf mit einem Überzug versehen sein. Dabei kann es sich um eine metallhaltige Schicht, einen Schutzlack oder eine Farbe handeln.

Weitere Merkmale, Einzelheiten und Vorteile der Erfindung ergeben sich aus dem Wortlaut der Ansprüche sowie aus der nachfolgenden Beschreibung.

Der Kunststofftank wird im Rotationsverfahren hergestellt, wobei zunächst die äußere Schicht aus vernetztem Polyethylen (XPE) ausgeformt wird.

Anschließend wird die innere Schicht aus Polyamid 11 (PA 11) oder Polyamid 12 (PA 12) eingebracht, so dass ein doppelwandiger Tankt entsteht. Beide Schichten sind fest miteinander verbunden, wobei die innere Schicht dünner ausgebildet ist als die äußere Schicht Der Verbrauch an PA 11 oder PA 12 wird dadurch verringert, was sich zugleich günstig auf das Gewicht des Tanks auswirkt.

Die äußere Schicht aus XPE ist zumindest abschnittsweise als optische Außenfläche gestaltet, während die innere Schicht aus PA11 oder PA 12 undurchlässig für den Kraftstoff bzw. für flüchtige Kraftstoffbestandteile ist, so dass der Tankt nicht nur eine außerordentlich hohe Stabilität und Festigkeit aufweist, sondern überdies dauerhaft dicht ist.

Mit der Kombination von XPE für die Außenschicht und PA 11 oder PA 12 für die Innenschicht geht die Erfindung über die frühere Technik hinaus, rotationsgeformte Tanks aus Polyethylen (PE) oder Polyamid (PA) zu fertigen. PE genügt den Permeationsanforderungen allgemein nicht; diese werden zwar von Polyamid erfüllt, doch mangelt es diesern Werkstoff an der ebenfalls notwendigen Tieftemperatur-Schlagfestigkeit. Versuche eines Aufbaues aus zwei Schichten, nämlich einer äußeren aus PE und einer inneren aus PA, erbrachten unbefriedigende Ergebnisse, weil die eine äußere PolyethylenSchicht sich nicht mit der Polyamid-Barriereschicht nicht ohne weiteres Verbinden lässt. Zudem ist es nicht möglich, Polyamid und PE ohne Haftvermittler miteinander zu verbinden.

Diese Nachteile treten bei den erfindungsgemäßen Tanks aus einer Kombination von XPE für die Außenschicht und PA 11 bzw PA 12 für die Innenschicht nicht auf. Das Polyethylen-Basismaterial (XPE) kann chemisch vernetzt oder strahlenvernetzt sein, so dass es eine ähnlich hohe Steifigkeit wie Duroplaste besitzt. Mit besonderem Vorteil stellt man daher die Kunststofftanks aus vernetztem XPE-Pulver im Rotationsschmelzverfahren her.

Das anschließend eingebrachte PA 11 oder PA 12 zeigt auf der Innenschicht aus XPE ein sehr hohes Haftvermögen, so dass eine feste, innige Verbindung mit der Außenschicht entsteht.

Die erfindungsgemäße Lösung erfüllt damit folgende Vorteile und Aufgaben:
■ weitgehende Designfreiheit bei der Formgebung;
■ optimale Bauraumausnutzung;
■ hohe Integrationsfähigkeit des Tanks im und am Fahrzeug;
■ hohe Integrationsfähigkeit für Einlegeteile im Tank;
■ maximales Kraftstoffvolumen;
■ geringes Behältergewicht;
■ hohe Festigkeit;
■ geringe Entwicklungs- und Fertigungskosten;
■ geringe Werkzeug- und Teilekosten.

Die Erfindung ist nicht auf eine der vorbeschriebenen Ausführungsformen beschränkt, sondern in vielfältiger Weise abwandelbar.

Sämtliche aus den Ansprüchen, der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Kunststofftank, insbesondere durch Rotationsschmelzen oder Blasformen hergestellter Kraftstofftank für ein Fahrzeug, mit einer ersten äußeren Schicht und einer zweiten inneren Schicht, **dadurch gekennzeichnet, dass** die äußere Schicht aus vernetztem Polyethylen und die innere Schicht aus Polyamid 11 oder aus Polyamid 12 besteht.

2. Kunststofftank nach Anspruch 1, **dadurch gekennzeichnet, dass** die innere Schicht fest an der äußeren Schicht haftet.

3. Kunststofftank nach Anspruch 1, **dadurch gekennzeichnet, dass** die innere Schicht dünner ausgebildet ist als die äußere Schicht

4. Kunststofftank nach Anspruch 1 oder 2, **dadurch gekennzeichnet, dass** die innere und/oder die äußere Schicht einen Überzug aufweist

5. Kunststofftank nach Anspruch 3, **dadurch gekennzeichnet, dass** der Überzug eine metallhaltige Schicht, ein Schutzlack oder Farbe ist.

## Claims

1. A plastic tank, in particular, a plastic tank produced by rotational molding or blow molding for a vehicle, comprising a first outer layer and a second inner layer, **characterized in that** the outer layer consists of cross-linked polyethylene and the inner layer consists of polyamide 11 or polyamide 12.

2. The plastic tank according to claim 1, **characterized in that** the inner layer permanently adheres to the outer layer.

3. The plastic tank according to claim 1, **characterized in that** the inner layer is formed to be thinner than the outer layer.

4. The plastic tank according to claim 1 or claim 2, **characterized in that** the inner and/or outer layer comprises a coating.

5. The plastic tank according to claim 3, **characterized in that** the coating is a metal-containing layer, a protective lacquer or paint.

## Revendications

1. Réservoir en matière plastique, en particulier réservoir en matière plastique obtenu par rotomoulage ou moulage par soufflage pour un véhicule, comprenant une première couche externe et une seconde couche interne, **caractérisé par le fait que** la couche externe consiste en polyéthylène réticulé et la couche interne consiste en polyamide 11 ou polyamide 12.

2. Réservoir en matière plastique selon la revendication 1, **caractérisé par le fait que** la couche interne adhère de façon permanente à la couche externe.

3. Réservoir en matière plastique selon la revendication 1, **caractérisé par le fait que** la couche interne est formée pour être plus mince que la couche externe.

4. Réservoir en matière plastique selon la revendication 1 ou la revendication 2, **caractérisé par le fait que** la couche interne et/ou externe comprend un revêtement.

5. Réservoir en matière plastique selon la revendication 3, **caractérisé par le fait que** le revêtement est une couche à teneur en métal, un vernis-laque protecteur ou peinture protectrice.
